# EUROPEAN PATENT APPLICATION

(11) **EP 2 221 332 A1**
(43) Date of publication of application: **25.08.2010**
(21) Application number: 09002570.1
(22) Date of filing: 24.02.2009
(51) Int. Cl.: C08G 18/62, C09D 175/04

(54) **Process to prepare low temperature curable waterborne polyurethane coatings**

(71) Applicant: Hexion Specialty Chemicals Research Belgium S.A., 1348 Ottignies Louvain-la-Neuve (BE)
(72) Inventor: Heymans, Denis, 1348 Ottignies Louvain-la-Neuve (BE); Le Fevere, Cédric, 1348 Ottignies Louvain-la-Neuve (BE); Steinbrecher, Christophe, 1348 Ottignies Louvain-la-Neuve (BE)

(57) **Abstract**

The invention relates to a process to prepare ambient curable waterborne polyurethane coatings by which the isocyanate and the polyols are mixed thoroughly before their emulsification in water, by low shear mixing at room temperature. The polyol resins composition suitable for the present invention are polyacrylate resins having a hydroxyl value of from 60 to 180 mg of KOH/g of solids, an acid value of from 10 to 30 mg of KOH/g of solids, and a calculated glass transition temperature of from 0° C to +65°C.

## Description

The invention relates to a process to prepare at ambient temperature a curable waterborne polyurethane coating by which the isocyanate and the polyols are mixed thoroughly before their emulsification in water.

The clearcoats prepared according to the teaching of currently available technologies present a poor balance between the appearance of the coatings, their VOC and their drying speed. Furthermore, in these systems, the fast reaction of the curing agent (isocyanate) with water is responsible for the shortening of the pot-life of the dispersion. Hence, the appearance of coatings deteriorates rapidly when they are applied for some time after mixing the ingredients.

US 2006 0216525 discloses coatings using a polyol dispersion blended with the crosslinker (isocyanate). EP1671 990 is similar to the previous one and deserves attention to the uses of aminoacids in the composition. WO2006/0394 also discloses a composition and a process, here also using polyols dispersions that are mixed with the isocyanate.

This technology of pre-emulsion (or pre-dispersion) is done at a temperature of 70 to <100°C, due to the high viscosity of the polyol resins. An additional drawback of this pre-emulsion route is that the storage of the emulsions may show problems of stability. Additionally, higher volumes are used and transported for the same pure polyol resin.

The coating industry is, therefore still looking for a way to reduce the storage and transport cost and to increase the quality of paints and cured coatings. It is also the environmental legislation that forces the applicators to reduce the use of organic solvent and requesting the water based paint compositions leading to high quality film properties, such as the ones obtained with solvent borne composition.

The prior art technology as reported above still suffer from several limitations. After a research and experimental work, we have designed polyol resins that can easily be formulated with a crosslinker as a waterborne paint. This technology differs from previously published technologies by the fact that the resin compositions used are different in acid value and by the, use of non hydrophobic groups of the glycidyl ester of highly alphatic branched acid (such as Versatic acid). The resin compositions of the present invention result in a polyol with a viscosity allowing the mixing, at a temperature between 5 and 30°C, of the prepared resins with commercially available isocyanate crosslinkers prior the emulsification step. The waterborne systems are formulated to the correct application viscosity by adjusting the solids content.

Coatings prepared with the paints made according to this process show a higher gloss and an improved distinctness of image (DOI) than coatings prepared according to the pre-emulsion route given in the prior art technology. The pot-live is also longer than the one of the prior art.

The composition obtainable according to claim 1 and characterized in the resin (a) is a polyacrylate resin having a hydroxyl value of from 60 to 180 mg of KOH/g (on solid resin), an average acid value of from 10 to 30 mg of KOH/g, and a calculated glass transition temperature of from 0° C to +65°C; wherein the polyacrylate resin comprises, as polymerized monomer units,
a1) one or more esters selected from the group consisting of esters of acrylic acid, esters of methacrylic acid, and mixtures thereof;
a2) one or more ethylenically unsaturated monomers having at least one hydroxyl group per molecule;
a3) at least one compound selected from the group consisting of reaction products of acrylic acid, methacrylic acid, maleic acid, and mixtures thereof with glycidyl esters of alpha-branched monocarboxylic acids having 5 to 18 carbon atoms per molecule, wherein said reaction products may be formed prior to, during, or after polymerization of the polyacrylate resin;
a4) one or more ethylenically unsaturated monomers having at least one carboxyl group per molecule; and
a5) optionally one or more additional ethylenically unsaturated monomers;
and further wherein the monomers of (a1), (a2), (a3), (a4), and (a5) are all different and copolymerizable with one another.

The resins can be prepared in one polymerization step or more; in case of a multiple step polymerization we have found that preferably, the acid should be varied, but keeping the average value between 10 and 30 mg KOH/g. The invention is described in more details in the examples below.

Vinyl aromatics useful for this invention include styrene, vinyltoluene, and t-butylstyrene, preferably 0-40 weight percent.

Acid functional monomers useful for this invention include acrylic acid, methacrylic acid, maleic acid, itaconic acid in a concentration of preferably2-18 weight percent.

Monoepoxyesters useful for this invention include the Versatic acid glycidylester know by the trademark Cardura E10 manufactured by Hexion Specialty Chemicals Inc and pivalic acid glycidylester, as well as the reaction product of a tertiary fatty acid up to 12 carbon atoms and epichlorohydrine, in a concentration of 5-50 weight percent.

Hydroxyfunctional monomers useful for this invention include 2-hydroxyethyl acrylate, hydroxypropyl acrylate, 4-hydroxybutyl acrylate, 2-hydroxyethyl methacrylate, and hydroxypropyl methacrylate, in a concentration of 0-30 weight percent.

Other polymerizable compounds useful for this invention include unsaturated monomers such as alkyl cycloalkyl, and aromatic methacrylates and alkyl, cycloalkyl, and aromatic acrylates, including methyl methacrylate, ethyl methacrylate, n-butyl methacrylate, isobutyl methacrylate, t-butyl methacrylate, 2-ethylhexyl methacrylate, isononyl methacrylate, lauryl methacrylate, stearyl methacrylate, cyclohexyl methacrylate, isobornyl methacrylate, phenyl methacrylate, t-butylcyclohexyl methacrylate, 3,3,5-trimethylcyclohexyl methacrylate, benzyl methacrylate, methyl acrylate, ethyl acrylate, n-butyl acrylate, isobutyl acrylate, t-butyl acrylate, 2-ethylhexyl acrylate, isononyl acrylate, lauryl acrylate, stearyl acrylate, cyclohexyl acrylate, isobornyl acrylate, phenyl acrylate, t-butylcyclohexyl acrylate, 3,3,5-trimethylcyclohexyl acrylate, and benzyl acrylate,and the vinyl ester of α,α branched carboxylic acids such as VeoVa 9 or VeoVa 10 (trademark from Hexion Specialty Chemicals Inc) in a concentration of 25-85 weight percent.

The polyol resins obtained by radical polymerization, with acid value of from 10 to 30 mg of KOH/g is neutralized by an amine.The amount of amine employed is typically between 70 to 130 percent of the amount of acid groups available, and preferably 90-110 percent on a molar basis. The preferred neutralizing agents are organic tertiaryamines from which amino hydroxyl functional compounds are the most preferred and exemplified with N,N-dimethylethanolamine (DMEA) and 2-dimethylamino 2-methylpropanol.

The waterborne coating composition can comprise from 0-65 weight percent solids of various additives such as thickeners, acrylic emulsions, urethane emulsions, anti-oxidants, UV absorbers, leveling agents, pigments, and extenders. Preferably, the waterborne coating composition comprises 30-80 weight percent solids of the copolymer, 0-30 weight percent solids of the additives. The curing agent is preferably used is an isocyanate/hydroxyl ratio of between 0.9 and 2.0.

The process to prepare the coating composition based on the above polyol resins is given in details in the examples. The general procedure is as follow: the polyol resin is placed in a flask at a temperature between 5 and 30°C, the cross linker is added and mixed with a spatula during 5 minutes, after this period water is added and mixing is continued for ds content and the viscosity of the paint is adjusted to the requirement of the application technique (spray or brush) by addition of water.

### General test methods.

The average particle size was determined with a Beckman Coulter Particle Size LS 13 320 Analyser from a dilution of the obtained emulsion.

The viscosity was determined with a Brookfield viscometer (spindle 2 - 60 RPM).

The solids content was calculated from the weight loss of a sample heated to 110°C in a ventilated oven over a period of 60 minutes.

Pot-live of the waterborne formulation is evaluated by measuring the DOI of the coatings applied at regular time intervals after preparation.

Shelf-live of the emulsion is appreciated by evaluation of the particle size and appearance of the emulsion upon storage.

The Mn and Mw were measured with a GPC with polystyrene as standard.

The distinctness of image (DOI) of the clear-coat films was determined with a Wave-Scan Dual from BYK-Gardner Analyser and reported in %.

Film application was made with a bar-coater 120 microns (thickness of the wet film) on Q panels to measure hardness and on Leneta sheets to measure DOI and gloss. Gloss was measured at an angle of 20°.

### Example 1

In a reactor equipped with a anchor stirrer, a thermometer, condenser and monomer/initator feeding system, 200g of Cardura 10 and 90g of ethoxypropanol (EPR) were loaded and heated to about 150°C. A mixture of 52g of hydroxyethylmethacrylate (HEMA), 160g of styrene, 68g of acrylic acid (AA), 10g of dicumylperoxide (DCP), 40g of CE10 and 40g of ethoxypropanol (EPR) were added over 2 hours 30 minutes to the reactor while keeping its content at 150°C. After the feed, the reactor content was held for 30 minutes at this temperature. After the 30 minutes hold period, 108g of HEMA, 30g of AA, 142g of isobutyl methacrylate (IBMA), 5g of DCP and 45 grams of EPR were added over 2 hours and 30 minutes at about 150°C followed by a rinsing step for the feed system with 5 g of EPR. After the rinsing step, the content of the reactor was held for 2 hours at 150°C. The reactor content was cooled down to 100°C and 100 parts of EPR were distilled off at atmospheric pressure.

The polyacrylate polyol has an acid value of 23.2 mg KOH/g on solids, a weight average molecular weight of 8400 and a number average molecular weight of 4600. The solids content of the solution was 90% by weight.

**Table 1: Composition of polyol Example 1**

| | **Materials** | **Intake (g)** |
|---|---|---|
| **Initial charge** | | |
| | EPR | 90 |
| | CE10 | 200 |
| **Monomer Addition 1** | | |
| | AA | 68 |
| | Styrene | 160 |
| | CE10 | 40 |
| | HEMA | 52 |
| | EPR | 40 |
| | DCP | 10 |
| **Monomer Addition 2** | | |
| | AA | 30 |
| | IBMA | 142 |
| | HEMA | 108 |
| | DCP | 5 |
| | EPR | 45 |
| **TOTAL** | | 990 |

### Process according the invention:

The formulation of the clear-coat is summarized in Table 2 below. First step is the addition of methoxypropanol acetate (MPA) to the polyol (A). DMEA, DBTDL and BYK 011 (B) are added successively to Component A at low shear rate. The hardener (C) is then added and the final step is the addition of demineralized water (D) to obtain the emulsion and a viscosity of 60cP.

**Table 2: Clear-coat Example 1 formulation**

| | weight (g) |
|---|---|
| **A** | |
| Polyol Example 1 | 100 |
| MPA | 20 |
| **B** | |
| DMEA | 3.3 |
| DBTDL 1% in butyl acetate | 0.9 |
| BYK 011 | 0.9 |
| **C** | |
| Desmodur N3390 | 58.2 |
| **D** | |
| Demineralized water | 190 |

The emulsion obtained had a viscosity of 60cP at 23°C and an average particle size of 240 nm. It was applied on Q panels and on Leneta sheets. The coatings were cured for first 15 minutes flash-off (air drying) then in an oven at 60°C for 30 minutes, the cured panels are stored at 23°C for 7 days. The characterization results are given in table 3.

**Table 3: Results clear-coat Example 1**

| | |
|---|---|
| Thickness dried film | 35-40 microns |
| Gloss | 77 % |
| DOI | 82% |
| Hardness after 1 day | 137 sec |

### Clear-coat with comparative process using resin of Example 1

This section describes the preparation of a clear-coat similar to the one described in Clear-coat Example 1 but were the emulsion occurs before the addition of the hardener.

### Preparation of an emulsion of polyol Example 1

100g of polyol Example 1 and 20g of MPA (A) are put in a reactor equipped with an anchor stirrer, a thermometer and a condenser, heated to 100°C, neutralized with DMEA and diluted in 15 minutes with 166g of water preheated at about 70°C (B). The reactor is then cooled down to 23°C and C and D are added successively. E is then added to reach a viscosity of 60cP.

**Table 4: Clear-coat comparative Example 1 formulation**

| | weight (g) |
|---|---|
| **A** | |
| Polyol Example 1 | 100 |
| MPA | 20 |
| **B** | |
| DMEA | 3.3 |
| Water | 166 |
| **C** | |
| DBTDL 1% in butyl acetate | 0.9 |
| BYK 011 | 0.9 |
| **D** | |
| Desmodur N3390 | 58.2 |
| **E** | |
| Demineralized water | 62 |

The emulsion obtained had a viscosity of 60cP at 23°C and an average particle size of 2 microns. It was applied on Q panels and on Leneta sheets. The coatings were cured for first 15 minutes flash-off (air drying) then in an oven at 60°C for 30 minutes, the cured panels are stored at 23°C for 7 days. The characterization results are given in Table 5.

**Table 5: Results clear-coat comparative Example 1**

| | |
|---|---|
| Thickness dried film | 35-40 microns |
| Gloss | 29 % |
| DOI | 62 % |
| Hardness after 1day | 127 sec |

### Example 2

### Preparation of polyacrylate polyol 2

A reaction vessel equipped with an anchor stirrer, a condenser, a thermocouple, and a nitrogen inlet device was charged with 145 g butylglycol and heated to 140°C under a nitrogen flow of 20 liters per hour. Then a mixture of 108 g n-butyl acrylate, 95 g styrene, 101 g methyl methacrylate, 139 g hydroxyethyl acrylate, 14 g lauryl methacrylate, and 15 g Trigonox 42S was added continuously to the reactor. During the addition, the temperature of the reactor content was maintained at 140°C. After a dosing time of 165 minutes, when about 75 weight-percent of the monomer and the initiator had been added, the addition was stopped. In this first phase, a hydrophobic acrylic polymer without acid-functional groups was formed.

A preformed mixture of 7 g 2-acrylamido 2-methyl propane sulphonic acid, 3 g 2-(dimethyl amino) ethanol, and 12 g butylglycol was mixed with 9 g of acrylic acid. This mixture was then added to the remaining portion of the monomer and initiator mixture. The resulting mixture was homogenized. Subsequently, the mixture was fed to the reactor over a period of 75 minutes, the temperature in the reactor being held at 140°C. In this second phase acid-functional polymers are formed.

After completion of the monomer addition, the dosing equipment was rinsed with 14 g butylglycol, which was subsequently added to the reactor content. The reactor charge was held at 140°C for 15 minutes. A solution of 1 g Trigonox 42 S in 4 g of butylglycol was then added in two equal portions with a time interval of 15 minutes. After the mixture was held at 140°C for another 30 minutes, the reactor content was cooled down to room temperature.

The polyacrylate polyol has an acid value of 19 mg KOH/g on solids, a weight average molecular weight of 12000 and a number average molecular weight of 4100. The solids content of the solution was 72 % by weight.

**Table 6 Composition of polyol example 2**

| | **Materials** | **Intake (g)** |
|---|---|---|
| **Initial charge** | | |
| | butylglycol | 145.3 |
| **Monomer Addition 1** | | |
| | n-butyl acrylate | 108.0 |
| | styrene | 94.7 |
| | methyl methacrylate | 101.3 |
| | hydroxyethyl acrylate | 138.7 |
| | lauryl methacrylate | 14.0 |
| | trigonox 42S | 14.7 |
| **Monomer Addition 2** | | |
| | 2-acrylamido 2-methyl | |
| | propane sulphonic acid | 7.3 |
| | 2-(dimethyl amino) ethanol | 3.3 |
| | butylglycol | 12.0 |
| | acrylic acid | 8.7 |
| **Post reaction** | | |
| | Ttrigonox 42S | 0.7 |
| | butylglycol | 4.0 |
| **TOTAL** | | 652.7 |

### Clear-coat example 2

### Process according the invention:

The preparation of a clear-coat using polyol example 2.

The formulation of the clear-coat is summarized in Table 7 below. A is made by the successive addition of DMEA, DBTDL and BYK 011 to the polyol at low shear rate. The hardener (B) is then added and the final step is the addition of demineralize water (C) to obtain the emulsion and a viscosity of 60cP.

**Table 7: Clear-coat example 2 formulation**

| | weight (g) |
|---|---|
| **A** | |
| Polyol Example 2 | 100 |
| DMEA | 1.6 |
| DBTDL 1% in butyl | |
| acetate | 0.7 |
| BYK 011 | 0.7 |
| **B** | |
| Desmodur N3390 | 43 |
| **C** | |
| Demineralized | |
| water | 148 |

The emulsion obtained has a viscosity of 60cP at 23°C and an average particle size of 550nm. It was then applied on Q panels and on Leneta sheets. The coatings were cured for first 15 minutes flash-off (air drying) then in an oven at 60°C for 30 minutes, the cured panels are stored at 23°C for 7 days. The characterization results are given in Table 8 below.

**Table 8: Results Clear-coat Example 2**

| | |
|---|---|
| Thickness dried film | 35-40 microns |
| Gloss | 78 % |
| DOI | 83 % |
| Hardness after 1 day | 99 sec |

### Clear-coat Comparative process using resin of Example 2

This section describes the preparation of a clear-coat similar to the one described in clear-coat Example 2 but where the emulsion occurs before the addition of the hardener.

### Preparation of an emulsion of polyol Example 2

Into a glass reactor equipped with an anchor stirrer, a nitrogen inlet, and a condenser, 100 g of polyacrylate polyol solution 1 described above were charged and heateded to 130°C under a nitrogen flow of 20 liters per hour. The content of the reactor was added gradually, over a period of 20 minutes, to a second reactor containing 125 g demineralized water and 1.6 g dimethylethanolamine pre-heated to 50-55°C. During the addition of the concentrated resin solution the temperature in the second reactor increased to about 60°C. A white aqueous emulsion was obtained, which was stirred at 55-60°C for a period of 60 minutes. Finally the emulsion was cooled down to room temperature and filtered. The polyacrylate emulsion had an average particle size of 240 nm.

The formulation of the clear-coat is summarized in Table 9 below. (A) is the emulsion made as described above. DBTDL and BYK 011 (B) are added successively to (A) at low shear rate. The hardener (C) is then added and the final step is the addition of demineralized water (D) to obtain a viscosity of 60cP.

**Table 9: Clear-coat Comparative Example 2 formulation**

| | Weight (g) |
|---|---|
| **A** | |
| Polyol Example 2 | 100 |
| DMEA | 1.6 |
| Water | 125 |
| **B** | |
| DBTDL 1% in butyl acetate | 0.7 |
| BYK 011 | 0.7 |
| **C** | |
| Desmodur N3390 | 43 |
| **D** | |
| Demineralized water | 140 |

The emulsion obtained had a viscosity of 60cP at 23°C and an average particle size of 13microns. It was then applied on Q panels and on Leneta sheets. The coatings were cured for first 15 minutes flash-off (air drying) then in an oven at 60°C for 30 minutes, the cured panels are stored at 23°C for 7 days. The characterization results are given in Table 10 below.

**Table 10: Results Clear-coat Comparative Example 2**

| | |
|---|---|
| Thickness dried film | 35-40 microns |
| Gloss | 16 % |
| DOI | 0 % |
| Hardness after 1 day | 73sec |

The results as reported in Tables 3, 5, 8 and 10 are clear indications that the process according the invention lead to an improved coating.

## Claims

1. An aqueous two-component coating composition comprising: (a) water-dispersable polyol resin comprising a reaction products of acrylic acid, methacrylic acid, maleic acid, and mixtures thereof with glycidyl esters of alpha-branched monocarboxylic acids and (b) at least one polyisocyanate crosslinking agent, obtainable by a low shear and low temperature manual mixing process with water.

2. The composition obtainable according to claim 1 and **characterized** that in the resin (a) is a polyacrylate resin having a hydroxyl value of from 60 to 180 mg of KOH/g of solids, an acid value of from 10 to 30 mg of KOH/g of soluids, and a calculated glass transition temperature of from 0° C to +65° C; wherein the polyacrylate resin comprises, as polymerizable monomer units,
a1) one or more esters selected from the group consisting of esters of acrylic acid, esters of methacrylic acid, and mixtures thereof;
a2) one or more ethylenically unsaturated monomers having at least one hydroxyl group per molecule;
a3) at least one compound selected from the group consisting of reaction products of acrylic acid, methacrylic acid, maleic acid, and mixtures thereof with glycidyl esters of alpha-branched monocarboxylic acids having 5 to 18 carbon atoms per molecule, wherein said reaction products may be formed prior to, during, or after polymerization of the polyacrylate resin;
a4) one or more ethylenically unsaturated monomers having at least one carboxyl group per molecule; and
a5) optionally one or more additional ethylenically unsaturated monomers;
and further wherein the monomers of (a1), (a2), (a3), (a4), and (a5) are all different and copolymerizable with one another.

3. The process of claim 1 **characterized in that** the polyol resin (a) of claim 2 is mixed with the crosslinker (b) by hand with spatula and at a temperature between 15 and 30°C.

4. The composition of claim 1 comprising a neutralizing agent in an amount of between 70 to 130 percent of the acid groups available, and preferably 90-110 percent on a molar basis and selected from organic amines from which amino hydroxyl functional compounds are the most preferred and exemplified by N,N-dimethylethanolamine (DMEA) and 2,2-dimethylamino-2-methylpropanol.

5. The composition of claim 1 comprising from 0-65 weight percent solids of various additives such as thickeners, acrylic emulsions, urethane emulsions, anti-oxidants, UV absorbers, leveling agents, pigments, and extenders, preferably the composition comprises 30-80 weight percent solids of the copolymer, 0-30 weight percent solids of the additives.

6. The composition of claim 1 comprising the isocyanate curing agent with an isocyanate/hydroxyl molar ratio of 0.9 to 2.0.
